# EUROPEAN PATENT APPLICATION

(11) **EP 4 749 806 A1**
(43) Date of publication of application: **27.05.2026**
(21) Application number: 24869654.4
(22) Date of filing: 07.04.2024
(51) Int. Cl.: H01M 50/528, H01M 50/516

(54) **BATTERY CELL, BATTERY AND ELECTRICAL APPARATUS**

(30) Priority: 25.09.2023 CN 202311242972
(71) Applicant: Contemporary Amperex Technology Co., Limited, Ningde, Fujian 352100 (CN)
(72) Inventor: WU, Kai, Ningde, Fujian 352100 (CN); YANG, Zhenfei, Ningde, Fujian 352100 (CN); BAI, Qinglin, Ningde, Fujian 352100 (CN); WANG, Zejiang, Ningde, Fujian 352100 (CN)
(74) Representative: Ziebig Hengelhaupt Intellectual Property Attorneys Patentanwaltskanzlei PartGmbB
(86) International application number: PCT/CN2024/086427
(87) International publication number: WO 2025/066085

(57) **Abstract**

The present application provides a battery cell, a battery, and an electrical apparatus. The battery cell (200) includes a case (221); an electrode assembly (21), the electrode assembly (21) being provided with a tab (211); and a current collector plate (30) including a first connecting plate (31) and a second connecting plate (32) that are connected, where the first connecting plate (31) is connected to the tab (211) by welding, and the second connecting plate (32) is connected to the case (221) by welding; and in a direction perpendicular to a thickness direction of the second connecting plate (32), a projection of the first connecting plate (31) at least partially overlaps with a projection of the second connecting plate (32). The current collector plate (30) can improve the stability and reliability of a connection between the case (221) and the tab (211); in addition, the current collector plate (30) has a small thickness, which can reduce occupied space in the battery cell (200) to improve energy density of the battery cell (200).

## Description

The present application claims priority to Chinese Patent Application No. 202311242972.7 filed with the China National Intellectual Property Administration on September 25, 2023 and entitled "BATTERY CELL, BATTERY, AND ELECTRICAL APPARATUS", which is incorporated herein by reference in its entirety.

### TECHNICAL FIELD

The present application relates to the field of battery technologies, and in particular, to a battery cell, a battery, and an electrical apparatus.

### BACKGROUND

The statement here merely provides background information related to the present application, and does not necessarily constitute the prior art. With energy saving and emission reduction being the key to the sustainable development of the automobile industry, electric vehicles have become an important part of the sustainable development of the automotive industry due to their advantages of energy conservation and environmental protection. For electric vehicles, the battery technology is an important factor related to their development.

Cylindrical batteries require a current collector plate to connect a negative tab and a case so that the case can be used as a negative electrode terminal. The negative tab is usually made of copper, and the case is usually made of steel. To facilitate welding, the current collector plate usually adopts a laminated composite structure of copper and steel sheets. However, this laminated composite structure takes up a large space and will reduce energy density of a battery.

### SUMMARY

An objective of embodiments of the present application is to provide a battery cell, a battery, and an electrical apparatus, so as to solve the problem in the related art that a laminated composite current collector plate occupies a large space, which reduces the energy density of a battery.

In a first aspect, an embodiment of the present application provides a battery cell, including:
a case;
an electrode assembly mounted in the case, the electrode assembly being provided with a tab; and
a current collector plate including a first connecting plate and a second connecting plate, where the first connecting plate is connected to the second connecting plate, the first connecting plate is connected to the tab by welding, and the second connecting plate is connected to the case by welding; and
in a direction perpendicular to a thickness direction of the second connecting plate, a projection of the first connecting plate at least partially overlaps with a projection of the second connecting plate.

In the technical solution of the embodiment of the present application, the first connecting plate is connected to the second connecting plate to manufacture the current collector plate, so that the first connecting plate is welded to the tab of the battery cell, and the second connecting plate is welded to the case of the battery cell, so as to realize the connection between the case and the tab by the current collector plate, thereby improving the stability and reliability of the connection. In the direction perpendicular to the thickness of the second connecting plate, the projection of the first connecting plate is caused to at least partially overlap with the projection of the second connecting plate, so that in the thickness of the manufactured current collector plate, the first connecting plate at least partially overlaps with the second connecting plate, which can reduce the thickness of the current collector plate, thereby reducing the space occupied in the battery cell to improve the energy density of the battery cell.

In some embodiments, the second connecting plate is provided with an opening, and the first connecting plate is embedded in the opening.

By embedding the first connecting plate in the opening of the second connecting plate, the thickness of the manufactured current collector plate can be reduced, thereby reducing the space occupied in the battery cell to improve the energy density of the battery cell.

In some embodiments, one side of the first connecting plate is connected to the second connecting plate.

One side of the first connecting plate is connected to the second connecting plate, so that when the first connecting plate is twisted and deformed due to welding, the second connecting plate can have less restraint on the first connecting plate, and in this way, the first connecting plate can be better adapted to be welded to the tab, thereby reducing a press-fitting clearance between the first connecting plate and the tab and reducing the risk of cold solder joints.

In some embodiments, the current collector plate further includes a folding portion, and the folding portion is laminated on the second connecting plate, with one side of the folding portion connected to an edge of the second connecting plate and the other side of the folding portion connected to the first connecting plate.

The folding portion is provided to facilitate connection of the first connecting plate, and the folding portion is laminated on the second connecting plate so that the first connecting plate at least partially overlaps with the second connecting plate in the thickness of the current collector plate, and the first connecting plate and the second connecting plate are connected, which facilitates the manufacturing of the current collector plate.

In some embodiments, the second connecting plate includes a main body part and an adapting portion, the adapting portion is connected to the main body part, the adapting portion and the folding portion are fitted and laminated together, and a thickness of the adapting portion is less than a thickness of the main body part.

The adapting portion is provided, and the thickness of the adapting portion is set to be small, so that after the folding portion and the adapting portion are laminated, the overall thickness is small, and in this way, the thickness of the manufactured current collector plate is small, thereby reducing the space occupied in the battery cell to improve the energy density of the battery cell.

In some embodiments, a sum of the thicknesses of the folding portion and the adapting portion is less than a sum of the thicknesses of the first connecting plate and the main body part.

Through the above structural design, the thickness of the manufactured current collector plate can be made smaller, thereby reducing the space occupied in the battery cell to improve the energy density of the battery cell.

In some embodiments, the folding portion and the second connecting plate are of an integrally formed structure.

The folding portion and the second connecting plate are integrally formed to facilitate connection between the folding portion and the second connecting plate, and further facilitate processing and manufacturing. For example, the second connecting plate and the folding portion can be obtained by stamping a sheet of a material used for manufacturing the second connecting plate, which is convenient for manufacturing. In addition, when an opening is provided on the second connecting plate, a sheet-like plate member of the material used for manufacturing the first connecting plate may be connected to a sheet-like plate member of the material used for manufacturing the second connecting plate, then the first connecting plate, the folding portion, and the second connecting plate are formed by stamping, and then they are folded so that the first connecting plate is embedded in the opening of the second connecting plate, and the current collector plate is obtained, which is convenient for manufacturing and batch production.

In some embodiments, a crease is provided at the connection between the folding portion and the second connecting plate.

The crease is provided at the connection between the second connecting plate and the folding portion to facilitate folding the folding portion onto the second connecting plate.

In some embodiments, when the opening is provided on the second connecting plate, the first connecting plate is embedded in the opening, the second connecting plate is welded to the case to form a welding region, the welding region is arranged around the first connecting plate, and the crease is located on a radial outer side of the welding region.

The welding region formed by welding the second connecting plate to the case is arranged around the first connecting plate, which can increase a welding area between the case and the second connecting plate, reduce internal resistance, and improve structural strength. The crease is provided on the radial outer side of the welding region, so that the welding region of the formed current collector plate can be arranged around the first connecting plate to facilitate welding to the case.

In some embodiments, the folding portion is provided with a first thinned region, the first connecting plate is provided with a second thinned region, and the first thinned region is laminated and connected to the second thinned region.

The first thinned region is staggered with the adapting portion, and a sum of thicknesses of the first thinned region and the second thinned region is less than the sum of the thicknesses of the first connecting plate and the main body part. Alternatively, the first thinned region is at least partially laminated on the second connecting plate, and a sum of the thicknesses of the adapting portion, the first thinned region, and the second thinned region is less than the sum of the thicknesses of the first connecting plate and the main body part.

The first thinned region is provided on the folding portion, and the second thinned region is provided on the first connecting plate. The first thinned region and the second thinned region are laminated to facilitate connection.

The sum of the thicknesses of the first thinned region and the second thinned region is smaller than the sum of the thicknesses of the first connecting plate and the main body part, so that the thickness of the manufactured current collector plate may be small, thereby reducing the space occupied in the battery cell to improve the energy density of the battery cell.

The sum of the thicknesses of the adapting portion, the first thinned region, and the second thinned region is smaller than the sum of the thicknesses of the first connecting plate and the main body part, so that the maximum thickness of the entire manufactured current collector plate may be small, thereby reducing the space occupied in the battery cell to improve the energy density of the battery cell.

In some embodiments, the first thinned region is connected to the second thinned region by penetration welding, or the first thinned region is connected to the second thinned region by riveting.

The first thinned region and the second thinned region are connected by penetration welding, which is convenient for connection and manufacturing.

The first thinned region is connected to the second thinned region by riveting, so that the first thinned region and the second thinned region are more firmly connected.

In some embodiments, an edge of the first connecting plate is connected to the second connecting plate by butt welding.

The edge of the first connecting plate is butt welded to the second connecting plate, which is convenient for design and processing.

In some embodiments, a first laminating portion is provided on the edge of the first connecting plate, a second laminating portion is provided on the second connecting plate, the first laminating portion and the second laminating portion are laminated and connected, and a sum of thicknesses of the first laminating portion and the second laminating portion is less than a sum of the thicknesses of the first connecting plate and the second connecting plate.

By arranging the first laminating portion and the second laminating portion, and laminating and connecting the first laminating portion and the second laminating portion, the connection is convenient; and the sum of the thicknesses of the first laminating portion and the second laminating portion is smaller than the sum of the thicknesses of the first connecting plate and the second connecting plate, so that the thickness of the manufactured current collector plate is small.

In some embodiments, the first laminating portion and the second laminating portion are connected by penetration welding, or the first laminating portion and the second laminating portion are connected by riveting.

Penetration welding or riveting the first laminating portion and the second laminating portion enables convenient connection, thereby connecting the first connecting plate to the second connecting plate.

In some embodiments, an outer contour of the second connecting plate is quasi-circular.

The outer contour of the second connecting plate is configured to be quasi-circular, so as to facilitate application to a cylindrical battery cell.

In some embodiments, the opening is circular.

The opening on the second connecting plate is configured to be circular, so as to facilitate application to the cylindrical battery cell.

In some embodiments, the first connecting plate is quasi-circular.

The first connecting plate is quasi-circular, so as to facilitate connection of the first connecting plate to the tab.

In some embodiments, a through hole is formed in the first connecting plate at a position corresponding to a center of the opening.

The through hole is provided on the first connecting plate, which can play a positioning role when the first connecting plate is welded to the tab, and a pressure relief mechanism is provided on one side of the case corresponding to the current collector plate. When the battery cell expands for pressure relief, it facilitates ejection of an active material in the case, thereby reducing the risk of the first connecting plate blocking the pressure relief mechanism and improving the reliability of the battery cell.

In some embodiments, the through hole is circular, elliptical, or polygonal.

The through hole is configured to be circular, elliptical, or polygonal to facilitate design and manufacturing. When the through hole is configured to be polygonal and a pressure relief mechanism is provided on one side of the case corresponding to the current collector plate, when the battery cell expands for pressure relief, the first connecting plate can be torn from a corner of the through hole to facilitate the ejection of the active material in the case, thereby reducing the risk of the first connecting plate blocking the pressure relief mechanism and improving the reliability of the battery cell.

In a second aspect, an embodiment of the present application provides a battery, including the battery cell as described in the above embodiment.

In a third aspect, an embodiment of the present application provides an electrical apparatus, including the battery as described in the above embodiment.

The above illustrations are merely brief descriptions for the technical solutions of the present application. Specific implementation manners of the present application are described specifically in the following to understand the technical solutions of the present application more clearly and implement the present application according to content of the specification, and to make the above and other objectives, features and advantages of the present application more comprehensible.

### BRIEF DESCRIPTION OF DRAWINGS

In order to illustrate the technical solutions in the embodiments of the present application more clearly, the drawings to be used in description of the embodiments or exemplary technologies will be briefly introduced below. Obviously, the drawings described below are only some embodiments of the present application. For those of ordinary skill in the art, other drawings can also be obtained based on these drawings without any creative efforts.
FIG. 1 is a schematic diagram of a structure of a vehicle according to some embodiments of the present application;
FIG. 2 is a schematic diagram of an exploded structure of a battery according to some embodiments of the present application;
FIG. 3 is a schematic diagram of a sectional structure of a battery cell according to some embodiments of the present application;
FIG. 4 is a schematic diagram of a bottom-view structure of a battery cell according to some embodiments of the present application;
FIG. 5 is a schematic diagram of a structure of a first type of current collector plate according to some embodiments of the present application;
FIG. 6 is a schematic diagram of a sectional structure along a line A-A in FIG. 5;
FIG. 7 is a schematic diagram of a structure when the current collector plate of FIG. 5 is unfolded;
FIG. 8 is a schematic diagram of a preparation structure of the current collector plate shown in FIG. 5;
FIG. 9 is a schematic diagram of a structure of a second type of current collector plate according to some embodiments of the present application;
FIG. 10 is a schematic diagram of a structure of a third type of current collector plate according to some embodiments of the present application;
FIG. 11 is a schematic diagram of a structure of a fourth type of current collector plate according to some embodiments of the present application;
FIG. 12 is a schematic diagram of a structure when a current collector plate of FIG. 11 is unfolded;
FIG. 13 is a schematic diagram of a structure of a fifth type of current collector plate according to some embodiments of the present application;
FIG. 14 is a schematic diagram of a structure when a current collector plate of FIG. 13 is unfolded;
FIG. 15 is a schematic diagram of a sectional structure of a sixth type of current collector plate according to some embodiments of the present application;
FIG. 16 is a schematic diagram of a sectional structure of a seventh type of current collector plate according to some embodiments of the present application;
FIG. 17 is a schematic diagram of a structure of an eighth type of current collector plate according to some embodiments of the present application;
FIG. 18 is a schematic diagram of a structure of a ninth type of current collector plate according to some embodiments of the present application;
FIG. 19 is a schematic diagram of a structure of a tenth type of current collector plate according to some embodiments of the present application;
FIG. 20 is a schematic diagram of a structure of an eleventh type of current collector plate according to some embodiments of the present application;
FIG. 21 is a schematic diagram of a structure of a connecting portion of a first thinned region and a second thinned region in a twelfth type of current collector plate according to some embodiments of the present application; and
FIG. 22 is a schematic diagram of a structure of a thirteenth type of current collector plate according to some embodiments of the present application.

### List of Reference Numerals in the Drawings:

1000-Vehicle; 1001-Battery; 1002-Controller; 1003-Motor;
100-Box body; 101-First part; 102-Second part;
200-Battery cell; 21-Electrode assembly; 211-Tab; 22-Shell; 221-Case; 2211-Barrel; 2212-Bottom cover; 222-End cover;
30-Current collector plate; 31-First connecting plate; 310- Through hole; 311-Second thinned region; 312-Second hole position; 313-First laminating portion; 314-First mounting hole; 32-Second connecting plate; 320-Opening; 321-Main body part; 322-Adapting portion; 323-Second laminating portion; 324-Second mounting hole; 3201-Welding region; 33-Folding portion; 331-First thinned region; 332-First hole position; 34-Crease; 35-First rivet column; 36-Second rivet column; 301-First plate member; 302-Second plate member.

### DETAILED DESCRIPTION

In order to make the technical problems, technical solutions, and beneficial effects to be solved by the present application clearer, the following is a further detailed explanation of the present application in conjunction with the accompanying drawings and embodiments. It should be understood that the specific embodiments described herein are merely used to explain the present application but are not intended to limit the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF DESCRIPTION OF DRAWINGS are intended to cover non-exclusive inclusion.

In the description of the embodiments of the present application, the technical terms "first", "second", and the like, are used only to distinguish between different objects and are not to be understood as indicating or implying relative importance or implicitly specifying the number, particular order, or primary and secondary relationship of the technical features indicated. From this, features defined as "first" and second" may explicitly or implicitly include one or more features.

Reference to "an embodiment" herein means that a particular feature, structure, or characteristic described with reference to an embodiment can be included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described herein can be combined with other embodiments in any suitable manners.

In the description of the embodiments of the present application, the term "and/or" is merely an association that describes the associated object, indicating that there can be three kinds of relationships, such as A and/or B can indicate the following three situations: A exists alone, A and B exist at the same time, and B exists alone. Moreover, the character "/" herein generally indicates that the context objects are in an "or" relationship.

In the description of the embodiments of the present application, the term "a plurality of" refers to more than two (including two). Similarly, "a plurality of groups" refers to more than two groups (including two groups), and "a plurality of sheets" refers to more than two sheets (including two sheets). The meaning of "several" is one or more, unless otherwise explicitly and specifically defined.

In the description of the embodiments of the present application, orientation or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientation or positional relationships shown in the accompanying drawing, and are only for the convenience of describing the embodiments of the present application and simplifying the description, and do not indicate or imply that the apparatus or element referred to must have a specific orientation, be constructed and operated in a specific orientation, and therefore cannot be construed as a restriction on the embodiments of the present application.

In the description of the embodiments of the present application, unless otherwise expressly specified and limited, the technical terms "mount," "couple," "connect," "fix", etc., should be understood in a broad sense, such as, a fixed connection, a detachable connection, or an integral connection; or a mechanical connection, or an electrical connection; or a direct connection, an indirect connection through an intermediate medium, or an internal communication of two elements, or interaction between two elements. For those of ordinary skill in the art, the specific meaning of the above terms in the present application may be understood on a case-by-case basis.

In the description of the embodiments of the present application, unless otherwise expressly specified and limited, when an element is referred to as being "fixed to" or "arranged on" another element, the element can be directly or indirectly on the other element. When an element is referred to as being "connected to" another element, the component can be directly or indirectly connected to the other element.

In the description of the embodiments of the present application, unless otherwise expressly specified and limited, the technical term "adjacent" refers to being close in position. For example, for three components A1, A2, and B, a distance between A1 and B is greater than a distance between A2 and B, and therefore, for A2 and A1, A2 is closer to B, that is, A2 is adjacent to B, or it may be referred to that B is adjacent to A2. For another example, when there are a plurality of C components, and the plurality of C components are C1, C2, ..., and CN. When one of the C components, e.g., C2, is closer to a B component, B is adjacent to C2, or it may be referred to that C2 is adjacent to B.

The battery cell in the embodiments of the present application may include, but is not limited to, a lithium-ion secondary battery, a lithium-ion primary battery, a lithium-sulfur battery, a sodium-lithium-ion battery, a sodium-ion battery, a magnesium-ion battery, or the like. The shape of the battery cell may be, but is not limited to, a cylindrical shape, an elliptical cylindrical shape, a hexagonal prism shape, or other shapes. In the embodiments of the present application, the battery cells are mainly described as cylindrical battery cells.

The battery mentioned in the embodiments of the present application refers to a single physical module including one or more battery cells to provide higher voltage and capacity. For example, the battery mentioned in the present application may include a battery module, a battery pack, or the like. The battery generally includes a box body for packaging one or a plurality of battery cells. The box body can prevent liquid or other foreign matters from affecting charging or discharging of the battery cell to a certain extent. In some cases, the battery cells may be used directly, that is, the battery may not include a box body, which is not limited here.

In the battery, when there are a plurality of battery cells, the plurality of battery cells may be connected in series, in parallel, or in parallel-series, and the parallel-series connection means that the plurality of battery cells are connected in both series and parallel. The plurality of battery cells may be directly connected in series, in parallel, or in parallel-series, and then the entirety formed by the plurality of battery cells is accommodated in the box body. Of course, the battery may also be an entirety formed by connecting the plurality of battery cells in series, in parallel, or in parallel-series to form battery modules and then connecting the plurality of battery modules in series, in parallel, or in parallel-series, and is then accommodated in the box body. The battery may further include other structures. For example, the battery may further include a bus component for electrically connecting the plurality of battery cells.

The battery cell in the embodiment of the present application includes an electrode assembly and a shell. The shell includes an end cover and a case. The electrode assembly is mounted in the case. The end cover is covered on the case, and the case is filled with an electrolyte solution.

The electrode assembly is also referred to as a cell, and the electrode assembly is composed of a positive electrode plate, a negative electrode plate, and a separator. The operation of the electrode assembly mainly relies on the movement of metal ions between the positive electrode plate and the negative electrode plate. The positive electrode plate includes a positive electrode current collector and a positive electrode active material layer. A surface of the positive electrode current collector is coated with the positive electrode active material layer. A part on the positive electrode current collector not coated with the positive electrode active material layer protrudes from a part coated with the positive electrode active material layer. The part not coated with the positive electrode active material layer is used as a positive tab, or a metal conductor is welded to and lead out from the positive electrode current collector to serve as a positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer. A surface of the negative electrode current collector is coated with the negative electrode active material layer. A part on the negative electrode current collector not coated with the negative electrode active material layer protrudes from a part coated with the negative electrode active material layer. The part not coated with the negative electrode active material layer is used as a negative tab, or a metal conductor is welded to and lead out from the positive electrode current collector to serve as a negative tab. The material of the negative electrode current collector may be copper, and the negative electrode active material may be carbon, silicon, or the like.

The electrode assembly may be of a wound structure. The wound structure is usually formed by welding the tabs to the current collector, then arranging them in an order of positive electrode plate-separator-negative electrode plate-separator, and then winding them into a cylindrical or other columnar shape. The separator may be made of a material such as Polypropylene (PP) or Polyethylene (PE). The separator is an insulating film arranged between the positive electrode plate and the negative electrode plate, and mainly functions to isolate the positive and negative electrodes and prevent electrons in the battery from passing freely to prevent short circuits, while allowing ions in the electrolyte solution to pass freely between the positive and negative electrodes to form a circuit between the positive and negative electrodes. The positive electrode plate and the negative electrode plate are commonly referred to as electrode plates. The positive tab and the negative tab are commonly referred to as tabs.

After the electrode assembly is manufactured, it is necessary to mount the electrode assembly in the case and inject the electrolyte solution so that the electrode assembly is immersed in the electrolyte solution and the electrode assembly can fully absorb the electrolyte solution. The electrolyte solution can provide some active ions, which are used as conductive ions during charging and discharging processes. In addition, the electrolyte solution also provides ion channels, or referred to as carriers, so that the ions can move freely in the ion channels to achieve electrical conduction between the electrode plates.

In order to facilitate the charge and discharge of battery cells, the battery cells are often provided with electrode terminals. The electrode terminal refers to a conductive member arranged on the shell of the battery cell, and the electrode terminal is connected to the tab of the electrode assembly to output electric energy of the battery cell or charge the battery cell. The battery cell generally has two electrode terminals, and the two electrode terminals are respectively connected to the positive and negative tabs of the electrode assembly. The electrode terminal connected to the positive tab is a positive electrode terminal, and the electrode terminal connected to the negative tab is a negative electrode terminal.

The end cover refers to a component that covers the opening of the case to isolate an internal environment of the battery cell from an external environment. The shape of the end cover may be adapted to the shape of the case for fitting and covering the case. Optionally, the end cover may be made of a material (such as an aluminum alloy) with a certain hardness and strength, so that the end cover is not likely to be deformed when being pressed and collided, the battery cell is capable of having a higher structural strength, and the reliability can also be improved.

The case is an assembly configured for fitting the end cover to form the internal environment of the battery cell, where the formed internal environment can be used for accommodating the electrode assembly, an electrolyte solution, and other components. The case and the end cover may be separate components, an opening portion may be formed in the case, and the end cover covers the opening portion to form the internal environment of the battery cell. The case may be in various shapes and various sizes, such as a cylinder shape and a hexagonal prism shape. Specifically, the shape of the case may be determined based on the specific shape and size of the battery cell. The case may be made of a variety of materials including, but is not limited to, iron, aluminum, stainless steel, an aluminum alloy, and the like.

For a cylindrical battery cell, the case generally includes a barrel and a bottom cover, where the bottom cover covers one end of the barrel, and the end cover covers the other end of the barrel, so as to form the shell of the battery cell. The bottom of the case refers to an end portion of the case away from the end cover. For the case including the barrel and the bottom cover, the bottom of the case is generally the bottom cover. For the cylindrical battery cell, the bottom of the case is often used as a negative electrode, that is, the bottom cover is used as the negative electrode. The barrel refers to a cylindrical case structure that forms the main part of the case, and the bottom cover refers to a cover structure covering one end of the barrel. The bottom cover covers one end of the barrel to form a case structure. The bottom cover and the barrel can be made separately and then connected by welding. Of course, the bottom cover and the barrel can also be integrally formed.

The bottom of the case of the battery cell is used as the negative electrode, and the negative electrode of the electrode assembly needs to be led out to the case. If necessary, the negative tab is welded to the case to form a guide structure, especially welded to the bottom cover to form a guide structure. However, the material of the negative tab of the electrode assembly is generally copper, while the material of the case is generally steel case, aluminum alloy, and the like. Because the material of the tab is different from that of the case, expansion coefficients of different materials during welding are also different, which can easily lead to welding cracks or damage to the electrode assembly during welding. To solve this problem, a current collector plate structure with two materials laminated together is currently used. For example, a layer of copper sheet and a layer of steel sheet are laminated together, and the copper sheet is welded to the tab and the steel sheet is welded to the case to reduce the risk of welding cracks. However, this laminated composite structure takes up a lot of space and reduces the energy density of the battery.

Based on the above considerations, in order to solve the problem that the laminated composite current collector plate occupies a large space and will reduce the energy density of the battery, an embodiment of the present application provides a battery cell, where a current collector plate is formed by connecting a first connecting plate to a second connecting plate, so that the first connecting plate is welded to a tab of the battery cell, and the second connecting plate is welded to a case of the battery cell, thereby reducing the risk of welding cracks; and in a thickness of the manufactured current collector plate, the first connecting plate at least partially overlaps with the second connecting plate, so as to reduce the thickness of the current collector plate, thereby reducing the space occupied in the battery cell to improve the energy density of the battery cell.

The battery cell disclosed in the embodiment of the present application can be applied to an electrical apparatus using a battery as a power source or various energy storage systems using batteries as energy storage elements, such as applied to energy storage power systems of hydropower, thermal power, wind power, solar power plants, and the like. The electrical apparatus may be, but is not limited to, a mobile phone, a tablet, a notebook, an electric toy, an electric tool, a battery vehicle, an electric vehicle, a ship, a spacecraft, and the like. The electric toy includes fixed or mobile electric toys, such as a game machine, an electric vehicle toy, an electric ship toy, an electric airplane toy, and the like. The spacecraft includes an airplane, a rocket, a space shuttle, a spaceship, and the like.

For the convenience of description, an electrical apparatus being a vehicle provided in an embodiment of the present application is taken as an example for the description.

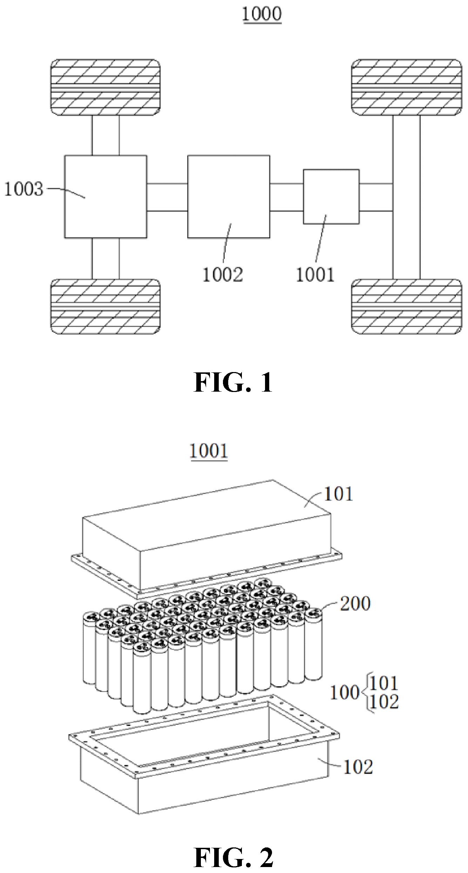

Referring to FIG. 1, FIG. 1 is a schematic diagram of a structure of a vehicle 1000 according to some embodiments of the present application. The vehicle 1000 may be a fuel vehicle, a gas vehicle, or a new energy vehicle, and the new energy vehicle may be an all-electric vehicle, a hybrid vehicle, an extended range electric vehicle, or the like. A battery 1001 is arranged inside the vehicle 1000. The battery 1001 may be arranged at the bottom, or head, or tail of the vehicle 1000. The battery 1001 may be configured to supply power for the vehicle 1000, for example, the battery 1001 may be used as an operating power source for the vehicle 1000. The vehicle 1000 may further include a controller 1002 and a motor 1003. The controller 1002 is configured to control the battery 1001 to supply power to the motor 1003, for example, for meeting operating power demand when the vehicle 1000 is starting, navigating, and driving.

In some embodiments of the present application, the battery 1001 may not only be used as an operating power source for the vehicle 1000, but also as a driving power source for the vehicle 1000, to replace or partially replace fuel or natural gas to provide driving power for the vehicle 1000.

Referring to FIG. 2, FIG. 2 is a schematic diagram of an exploded structure of a battery 1001 according to some embodiments of the present application. The battery 1001 include a box body 100 and a battery cell. The battery cell is accommodated in the box body 100. The box body 100 is configured to provide an accommodating space for the battery cell, and the box body 100 may be of various structures. In some embodiments, the box body 100 may include a first part 101 and a second part 102, the first part 101 and the second part 102 covering each other, and the first part 101 and the second part 102 together defining the accommodating space for accommodating the battery cell. The second part 102 may be of a hollow structure with an opening at one end, and the first part 101 may be of a plate-like structure, where the first part 101 covers the opening side of the second part 102 so that the first part 101 and the second part 102 together define the accommodating space. The first part 101 and the second part 102 may each be of a hollow structure with an opening at one end, where the opening side of the first part 101 covers the opening side of the second part 102. Of course, the box body 100 formed by the first part 101 and the second part 102 may be of a variety of shapes, such as a cylinder and a rectangular solid. A plurality of battery cells are combined in parallel connection or in series connection or in parallel-series connection and are then placed in the box body 100 formed by fastening the first part 101 to the second part 102.

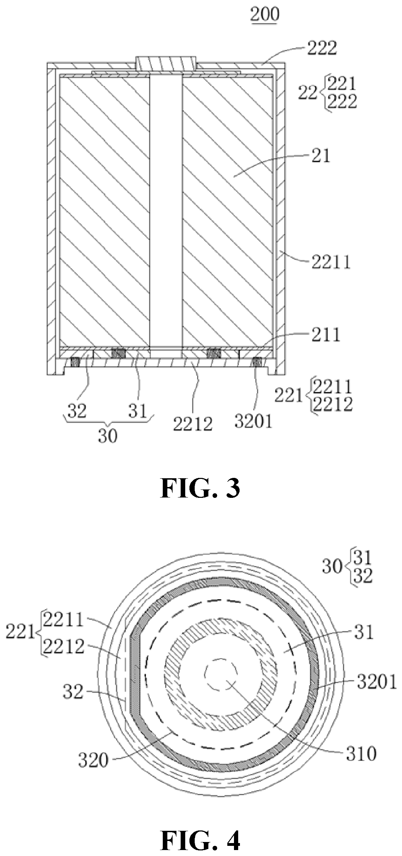

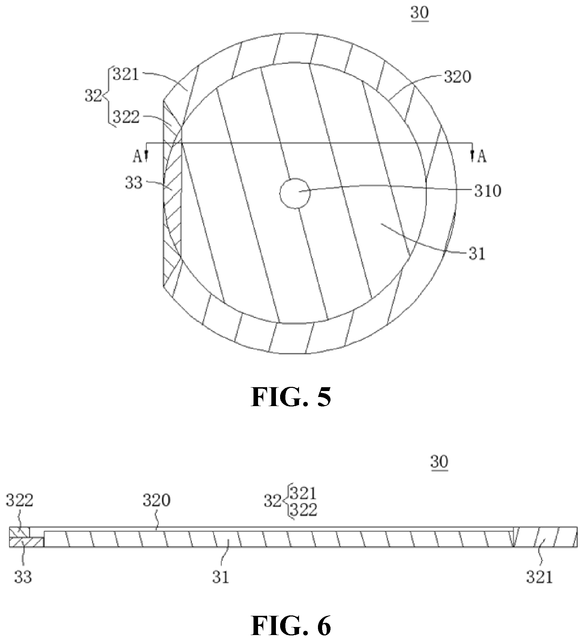

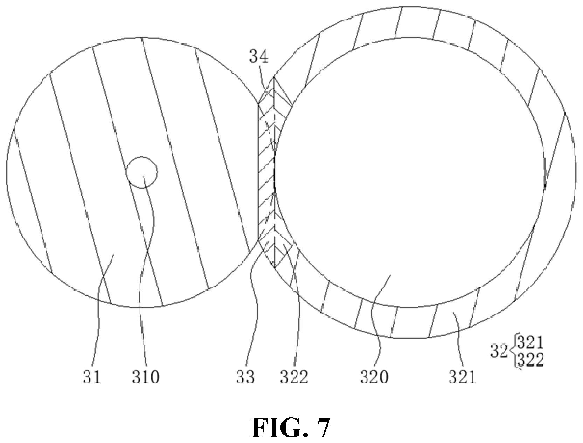

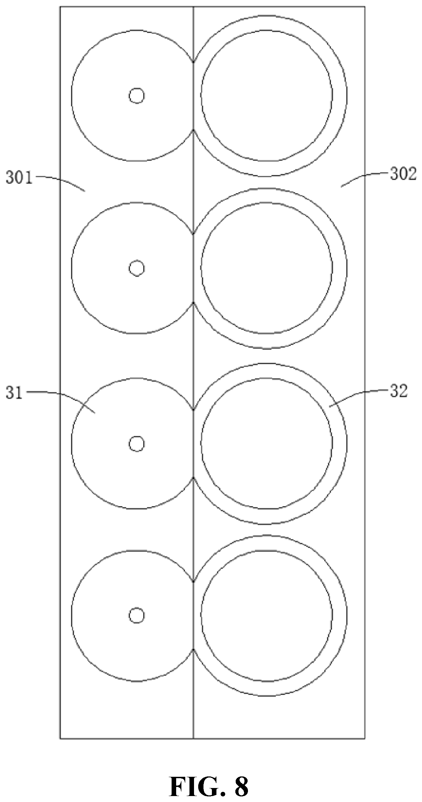

Referring to FIG. 3 to FIG. 8, FIG. 3 is a schematic diagram of a sectional structure of a battery cell 200 according to some embodiments of the present application. FIG. 4 is a schematic diagram of a bottom-view structure of a battery cell 200 according to some embodiments of the present application. FIG. 5 is a schematic diagram of a structure of a current collector plate 30 according to some embodiments of the present application. FIG. 6 is a schematic diagram of a sectional structure along a line A-A in FIG. 5. FIG. 7 is a schematic diagram of a structure when the current collector plate 30 of FIG. 5 is unfolded. FIG. 8 is a schematic diagram of a structure of a working procedure in a preparation process of the current collector plate 30 shown in FIG. 5.

The battery cell 200 provided in the embodiments of the present application includes a case 221; an electrode assembly 21 mounted in the case 221, the electrode assembly 21 being provided with a tab 211; and a current collector plate 30 including a first connecting plate 31 and a second connecting plate 32, where the first connecting plate 31 is connected to the second connecting plate 32, the first connecting plate 31 is connected to the tab 211 by welding, and the second connecting plate 32 is connected to the case 221 by welding; and in a direction perpendicular to a thickness direction of the second connecting plate 32, a projection of the first connecting plate 31 at least partially overlaps with a projection of the second connecting plate 32.

The case 221 refers to a portion of the shell 22 of the battery cell 200. The shell 22 includes the case 221 and an end cover 222, where the end cover 222 refers to a component that covers an opening portion of the case 221 to isolate the internal environment of the battery cell 200 from the external environment. The case 221 is an assembly for fitting the end cover 222 to form the internal environment of the battery cell 200, where the formed internal environment can be used to accommodate the electrode assembly 21, an electrolyte solution, and other components.

The electrode assembly 21 is mounted in the case 221, and the case 221 is configured to accommodate and protect the electrode assembly 21. The electrode assembly 21 is provided with a tab 211. The tab 211 is a tab 211 that is connected to the case 221 so that current can flow between the case 221 and the tab 211. In some embodiments, when the case 221 is used as the negative electrode of the battery cell 200, the first tab 211 is a negative tab. Of course, it is not ruled out that some battery cells 200 use the case 221 as the positive electrode, and in this case, the tab 211 is a positive tab.

The current collector plate 30 refers to a conductive structure that connects the case 221 and the tab 211 to enable current to flow between the case 221 and the tab 211.

The first connecting plate 31 refers to a sheet-shaped conductive component on the current collector plate 30 that is welded to the tab 211. The first connecting plate 31 is arranged to facilitate welding to the tab 211, thereby reducing the risk of welding cracks. The material of the first connecting plate 31 may be the same as that of the tab 211 to reduce the risk of welding cracks. Of course, the first connecting plate 31 may also be made of a material that is easy to weld to the tab 211 to reduce the risk of welding cracks. For example, when the tab 211 is made of copper, the first connecting plate 31 may also be made of copper.

The second connecting plate 32 refers to a sheet-shaped conductive component on the current collector plate 30 that is welded to the case 221. The second connecting plate 32 is arranged to facilitate welding to the case 221, thereby reducing the risk of welding cracks. The material of the second connecting plate 32 may be the same as that of the case 221 to reduce the risk of welding cracks. Of course, the second connecting plate 32 may also be made of a material that is easy to weld to the case 221 to reduce the risk of welding cracks. For example, when the case 221 is made of steel, the second connecting plate 32 may also be made of steel, and the second connecting plate 32 may also be made of a material such as nickel. For example, when the case 221 is made of aluminum alloy, the second connecting plate 32 may also be made of aluminum alloy.

The first connecting plate 31 is connected to the second connecting plate 32 so that current can flow between the first connecting plate 31 and the second connecting plate 32. The first connecting plate 31 and the second connecting plate 32 are manufactured to form the current collector plate 30. The current collector plate 30 can be manufactured separately so that the first connecting plate 31 and the second connecting plate 32 are connected stably and reliably, and therefore, the current collector plate 30 has good current conducting capability and current conducting reliability.

The first connecting plate 31 is welded to the tab 211, which can improve the stability of welding, reduce the risk of welding cracks, and reduce the risk of damage to the tab 211 and the electrode assembly 21, thereby improving the conductivity and reliability of current between the first connecting plate 31 and the tab 211.

The second connecting plate 32 is welded to the case 221, which can improve welding stability, reduce the risk of welding cracks, and improve the conductivity and reliability of current between the second connecting plate 32 and the case 221.

A thickness direction of the second connecting plate 32 is consistent with a thickness direction of the first connecting plate 31, and the thickness direction of the second connecting plate 32 is consistent with a thickness direction of the current collector plate 30.

In a direction perpendicular to the thickness direction of the second connecting plate 32, a projection of the first connecting plate 31 at least partially overlaps with a projection of the second connecting plate 32, which refers to that the projection of the first connecting plate 31 in the direction perpendicular to the thickness direction partially overlaps with or completely overlaps with the projection of the second connecting plate 32 in the direction perpendicular to the thickness direction.

Observation and measurement of the thickness of the current collector plate 30 need to be carried out in the direction perpendicular to the thickness direction of the current collector plate 30, and therefore, in a direction perpendicular to the thickness direction of the second connecting plate 32, the projection of the first connecting plate 31 at least partially overlaps with the projection of the second connecting plate 32, and in the thickness direction of the current collector plate 30, the first connecting plate 31 at least partially overlaps with the second connecting plate 32, so that an overall thickness of the manufactured current collector plate 30 is smaller than a sum of the thicknesses of the first connecting plate 31 and the second connecting plate 32, thereby reducing the thickness of the manufactured current collector plate 30. When applied to the battery cell 200, the space occupied in the shell 22 of the battery cell 200 can be reduced, thereby improving the energy density of the manufactured battery cell 200.

In the technical solution of the embodiment of the present application, the first connecting plate 31 is connected to the second connecting plate 32 to form the current collector plate 30, so that the first connecting plate 31 is welded to the tab 211 of the battery cell 200, and the second connecting plate 32 is welded to the case 221 of the battery cell 200, so as to realize the connection between the case 221 and the tab 211 by the current collector plate 30, thereby improving the stability and reliability of the connection. In the direction perpendicular to the thickness of the second connecting plate 32, the projection of the first connecting plate 31 is caused to at least partially overlap with the projection of the second connecting plate 32, so that in the thickness of the manufactured current collector plate 30, the first connecting plate 31 at least partially overlaps with the second connecting plate 32, which can reduce the thickness of the current collector plate 30, thereby reducing the space occupied in the battery cell 200 to improve the energy density of the battery cell 200.

In some embodiments, the case 221 includes a barrel 2211 and a bottom cover 2212, where the bottom cover 2212 covers one end of the barrel 2211, and the second connecting plate 32 is welded to the bottom cover 2212.

The barrel 2211 refers to a cylindrical case structure that forms the main part of the case 221, and the bottom cover 2212 refers to a cover structure covering one end of the barrel 2211. The bottom cover 2212 covers one end of the barrel 2211 to form a structure of the case 221. The bottom cover 2212 and the barrel 2211 can be made separately and then connected by welding. Of course, the bottom cover 2212 and the barrel 2211 can also be integrally formed. The bottom cover 2212 and the end cover 222 respectively cover both ends of the barrel 2211 to form the shell 22 of the battery cell 200. The bottom of the case 221 refers to an end portion of the case 221 away from the end cover 222. For the case 221 including the barrel 2211 and the bottom cover 2212, the bottom of the case 221 is generally the bottom cover 2212.

The second connecting plate 32 is welded to the bottom cover 2212 to realize welding the second connecting plate 32 to the case 221, which is convenient for connection and easy for processing and manufacturing.

In some embodiments, the second connecting plate 32 is provided with an opening 320, and the first connecting plate 31 is embedded in the opening 320.

The opening 320 refers to a through-hole structure provided on the second connecting plate 32 and passing through the thickness of the second connecting plate 32.

The first connecting plate 31 is embedded in the opening 320, which means that the first connecting plate 31 is entirely or at least partially extended into the opening 320. The first connecting plate 31 is embedded in the opening 320, and therefore, the first connecting plate 31 at least partially overlaps with the second connecting plate 32 in the thickness direction of the current collector plate 30. This structure can facilitate design and manufacturing.

By embedding the first connecting plate 31 in the opening 320 of the second connecting plate 32, the thickness of the manufactured current collector plate 30 can be reduced, thereby reducing the space occupied in the battery cell 200 to improve the energy density of the battery cell 200.

In some embodiments, one side of the first connecting plate 31 is connected to the second connecting plate 32.

One side of the first connecting plate 31 refers to a section of a circumference of the first connecting plate 31, and a side of the first connecting plate 31 where the section is located is one side of the first connecting plate 31.

One side of the first connecting plate 31 being connected to the second connecting plate 32 refers to that a section of the circumference of the first connecting plate 31 is connected to the second connecting plate 32.

When the first connecting plate 31 is welded to the tab 211, the first connecting plate 31 will be twisted and deformed. If the entire circumference of the first connecting plate 31 is connected to the second connecting plate 32, such as the first connecting plate 31 is placed in the opening 320 of the second connecting plate 32, and four circumferential sides of the first connecting plate 31 are connected to the second connecting plate 32, the four circumferential sides of the first connecting plate 31 will be constrained by the second connecting plate 32. This will cause twisting deformation caused by the welding of the first connecting plate 31 and the tab 211 to reduce the fit between the first connecting plate 31 and the tab 211, resulting in a press-fitting clearance between the first connecting plate 31 and the tab 211, and increasing the risk of cold solder joints.

The press-fitting clearance refers to a gap between two structural members when the two structural members are pressed against each other. The press-fitting clearance between the first connecting plate 31 and the tab 211 refers to a gap between the first connecting plate 31 and the tab 211 when the first connecting plate 31 and the tab 211 are pressed against each other for welding. A larger press-fitting clearance indicates a worse stability of the welding between the first connecting plate 31 and the tab 211, and a large possibility of causing a cold weld; and a smaller press-fitting clearance indicates a tighter fitting between the first connecting plate 31 and the tab 211, a stronger welding, and a better welding quality.

Only one side of the first connecting plate 31 is connected to the second connecting plate 32, so that only one side of the first connecting plate 31 is constrained by the second connecting plate 32. When the first connecting plate 31 is welded to the tab 211, the first connecting plate 31 can better adapt to the twisting deformation and increase the fit with the tab 211, thereby reducing the press-fitting clearance between the first connecting plate 31 and the tab 211 to reduce the risk of cold solder joints.

One side of the first connecting plate 31 is connected to the second connecting plate 32, so that when the first connecting plate 31 is twisted and deformed due to welding, the second connecting plate 32 can have less restraint on the first connecting plate 31, and in this way, the first connecting plate 31 can be better adapted to be welded to the tab 211, thereby reducing a press-fitting clearance between the first connecting plate 31 and the tab 211 and reducing the risk of cold solder joints.

In some embodiments, the current collector plate 30 further includes a folding portion 33, and the folding portion 33 is laminated on the second connecting plate 32, with one side of the folding portion 33 connected to an edge of the second connecting plate 32 and the other side of the folding portion 33 connected to the first connecting plate 31.

The folding portion 33 refers to a partial plate-shaped conductive structure connecting the second connecting plate 32 and the first connecting plate 31. When the folding portion 33 is unfolded, the second connecting plate 32 and the first connecting plate 31 are located on two opposite sides of the folding portion 33. When the folding portion 33 is folded onto the second connecting plate 32, the second connecting plate 32 is located on one surface of the folding portion 33, and the first connecting plate 31 is located on one side of the folding portion 33 in the thickness direction.

An edge of the second connecting plate 32 refers to an edge of the second connecting plate 32 on a side away from the first connecting plate 31 when the folding portion 33 is laminated on the second connecting plate 32.

One side of the folding portion 33 is connected to the edge of the second connecting plate 32, and the other side of the folding portion 33 is connected to the first connecting plate 31. After the folding portion 33 is folded onto the second connecting plate 32, the first connecting plate 31 can be located on the other side opposite to the side of the folding portion 33 connected to the second connecting plate 32.

The folding portion 33 is provided to facilitate connection of the first connecting plate 31, and the folding portion 33 is laminated on the second connecting plate 32 so that the first connecting plate 31 at least partially overlaps with the second connecting plate 32 in the thickness of the current collector plate 30, and the first connecting plate 31 and the second connecting plate 32 are connected, which facilitates the production of the current collector plate 30.

In some embodiments, the second connecting plate 32 includes a main body part 321 and an adapting portion 322, the adapting portion 322 is connected to the main body part 321, the adapting portion 322 and the folding portion 33 are fitted and laminated together, and a thickness of the adapting portion 322 is less than a thickness of the main body part 321.

The adapting portion 322 refers to a partial region on the second connecting plate 32 that is laminated and fitted to the folding portion 33, that is, the folding portion 33 is folded onto the adapting portion 322, and the main body part 321 is a partial region on the second connecting plate 32 excluding the adapting portion 322.

The thickness of the adapting portion 322 is smaller than the thickness of the main body part 321. In this way, after the folding portion 33 is folded onto the adapting portion 322, a sum of the thicknesses of the folding portion 33 and the adapting portion 322 will be smaller than a sum of the thicknesses of the folding portion 33 and the main body part 321, thereby making the overall thickness of the manufactured current collector plate 30 smaller.

The adapting portion 322 is provided, and the thickness of the adapting portion 322 is set to be smaller, so that after the folding portion 33 and the adapting portion 322 are laminated, the overall thickness is smaller, and in this way, the thickness of the manufactured current collector plate 30 is smaller, thereby reducing the space occupied in the battery cell 200 to improve the energy density of the battery cell 200.

In some embodiments, the sum of the thicknesses of the folding portion 33 and the adapting portion 322 is less than the sum of the thicknesses of the first connecting plate 31 and the main body part 321.

The thickness of the adapting portion 322 is smaller than the thickness of the main body part 321, and in the direction perpendicular to the thickness direction of the current collector plate 30, the projection of the first connecting plate 31 at least partially overlaps with the projection of the second connecting plate 32, the projection of the first connecting plate 31 at least partially overlaps with the projection of the main body part 321, so that the overall thickness of the current collector plate 30 is smaller than the sum of the thicknesses of the first connecting plate 31 and the main body part 321.

The folding portion 33 is folded onto the adapting portion 322, and the sum of the thicknesses of the folding portion 33 and the adapting portion 322 is set to be smaller than the sum of the thicknesses of the first connecting plate 31 and the main body part 321. This allows the sum of the thicknesses of the folding portion 33 and the adapting portion 322 to be less than or equal to the maximum thickness of the entire current collector plate 30, so that the lamination fitting of the folding portion 33 and the adapting portion 322 will not affect the overall thickness of the current collector plate 30, so that the overall thickness of the current collector plate 30 can be made smaller.

Through the above structural design, the thickness of the manufactured current collector plate 30 can be made smaller, thereby reducing the space occupied in the battery cell 200 to improve the energy density of the battery cell 200.

In some embodiments, the folding portion 33 and the second connecting plate 32 are of an integrally formed structure.

The folding portion 33 and the second connecting plate 32 are of an integrally formed structure, which refers to that the folding portion 33 and the second connecting plate 32 are made of the same conductive plate to facilitate processing and manufacturing. For example, the folding portion 33 and the second connecting plate 32 connected together can be obtained by stamping a sheet of a material used for manufacturing the second connecting plate 32.

The folding portion 33 and the second connecting plate 32 are integrally formed to facilitate connection between the folding portion 33 and the second connecting plate 32, and further facilitate processing and manufacturing. For example, the second connecting plate 32 and the folding portion 33 can be obtained by stamping the sheet of the material used for manufacturing the second connecting plate 32, which is convenient for manufacturing.

In some embodiments, a first plate member 301 and a second plate member 302 may be connected to form a larger plate member. The first plate member 301 may be made of the material used for manufacturing the first connecting plate 31, and the second plate member 302 may be made of the material used for manufacturing the second connecting plate 32. The entire plate member formed by connecting the first plate member 301 and the second plate member 302 is stamped to form the first connecting plate 31, the folding portion 33, and the second connecting plate 32. The folding portion 33 is then folded onto the second connecting plate 32 to form the current collector plate member 30. This structure is convenient for batch processing and manufacturing, and can effectively reduce manufacturing costs.

In addition, when an opening 320 is provided on the second connecting plate 32, a sheet-like plate member of the material used for manufacturing the first connecting plate 31 may be connected to a sheet-like plate member of the material used for manufacturing the second connecting plate 32, that is, the first plate member 301 and the second plate member 302 are connected and then stamped to form the first connecting plate 31, the folding portion 33, and the second connecting plate 32, which are then folded so that the first connecting plate 31 is embedded in the opening 320 of the second connecting plate 32, and the current collector plate 30 is obtained, which is convenient for manufacturing and batch production.

In some embodiments, the first plate member 301 may be welded to the second plate member 302 to facilitate connection.

In some embodiments, the first plate member 301 may be connected to the second plate member 302 by riveting to reduce the risk of welding cracks and ensure that the first plate member 301 and the second plate member 302 are firmly connected.

In some embodiments, when the first connecting plate 31 is located on one side of the second connecting plate 32 and the side of the first connecting plate 31 is connected to the second connecting plate 32, the entire plate member formed by connecting the first plate member 301 and the second plate member 302 can be directly stamped to form the current collector plate member 30, which is convenient for batch production and reduces costs.

In some embodiments, a crease 34 is provided at the connection between the folding portion 33 and the second connecting plate 32.

The connection between the folding portion 33 and the second connecting plate 32 refers to a position where the folding portion 33 is connected to the second connecting plate 32.

The crease 34 is a mark convenient for folding, and may be a long strip-shaped recessed groove or the like provided on the sheet member. The crease 34 is provided at the connection between the folding portion 33 and the second connecting plate 32, that is, a fold-facilitating mark is provided at the connection between the folding portion 33 and the second connecting plate 32 to facilitate folding the folding portion 33 onto the second connecting plate 32 at the crease 34.

The crease 34 is provided at the connection between the second connecting plate 32 and the folding portion 33 to facilitate folding the folding portion 33 onto the second connecting plate 32.

In some embodiments, when the opening 320 is provided on the second connecting plate 32, the first connecting plate 31 is embedded in the opening 320, the second connecting plate 32 is welded to the case 221 to form a welding region 3201, the welding region 3201 is arranged around the first connecting plate 31, and the crease 34 is located on a radial outer side of the welding region 3201.

The second connecting plate 32 is provided with an opening 320, and the first connecting plate 31 is embedded in the opening 320. In this way, the second connecting plate 32 can be arranged around the first connecting plate 31, so that when the second connecting plate 32 is welded to the case 221, a welding area of the second connecting plate 32 and the case 221 is increased, thereby improving the firmness and reliability of the welding of the second connecting plate 32 and the case 221 and reducing the internal resistance.

The welding region 3201 is arranged around the first connecting plate 31, which can further increase the welding area of the second connecting plate 32 and the case 221, thereby improving the firmness and reliability of the welding between the second connecting plate 32 and the case 221 and reducing the internal resistance.

The crease 34 is located on a radial outer side of the welding region 3201, so that when the second connecting plate 32 is welded to the case 221, the region for welding will not extend to the outside of the second connecting plate 32, which not only improves the welding quality but also provides good protection for the electrode assembly 21.

The welding region 3201 formed by welding the second connecting plate 32 to the case 221 is arranged around the first connecting plate 31, which can increase a welding area between the case 221 and the second connecting plate 32, reduce internal resistance, and improve structural strength. The crease 34 is provided on the radial outer side of the welding region 3201, so that the welding region 3201 of the formed current collector plate 30 can be arranged around the first connecting plate 31 to facilitate welding to the case 221.

In some embodiments, the shape of the welding region 3201 matches the shape of the second connecting plate 32, that is, if the second connecting plate 32 is circular, the welding region 3201 can be configured to be circular to facilitate welding, and the area of the welding region 3201 can be set to be large. The second connecting plate 32 is elliptical, and the welding region 3201 can be configured to be elliptical. If the second connecting plate 32 is quasi-circular, and the welding region 3201 can be configured to be quasi-circular.

When a planar structure, sheet structure, or plate structure has most of its circumference being arc-shaped, for example, regions of more than 2/3, more than 3/5, more than 4/7, more than 6/11, more than 7/13, and the like are arc-shaped, and other regions are linear-shaped, the shape of this structure is defined as quasi-circular. Therefore, when most regions of the outer circumference of the structural member are arc-shaped, and these arcs are located on the same circle, the shape of the structural member is considered to be quasi-circular. Of course, a circle may also be referred to as a special kind of quasi-circle.

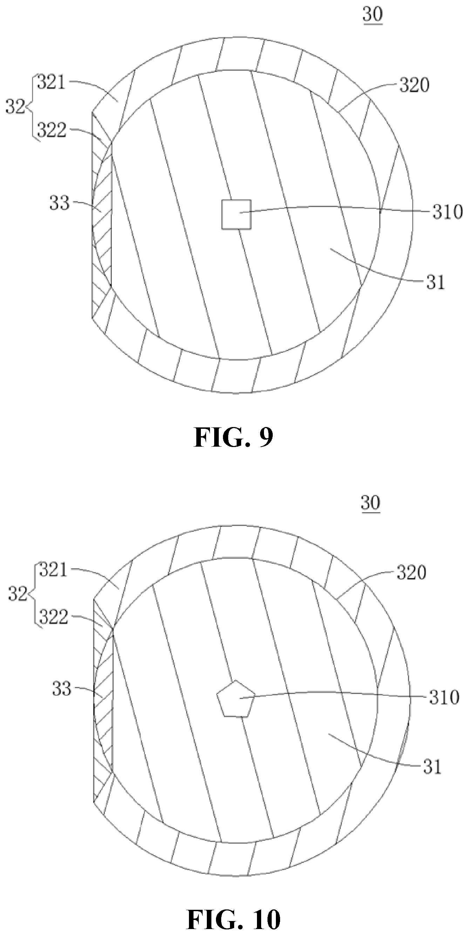

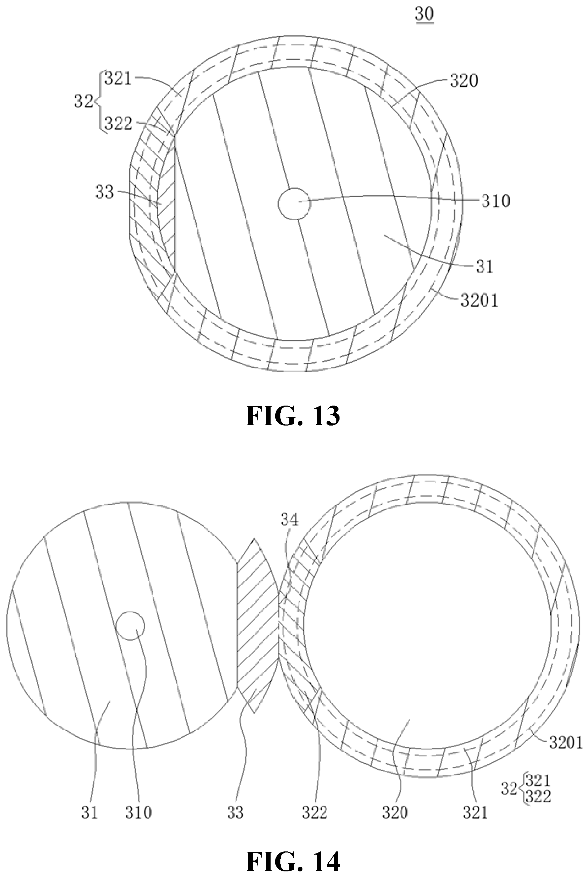

Referring to FIG. 5, FIG. 9, FIG. 10, and FIG. 13, FIG. 9 is a schematic diagram of a structure of a current collector plate 30 according to some embodiments of the present application. FIG. 10 is a schematic diagram of a structure of a current collector plate 30 according to other embodiments of the present application. FIG. 13 is a schematic diagram of a structure of a current collector plate 30 according to still other embodiments of the present application.

In some embodiments, the first connecting plate 31 is adapted to the size of the opening 320. For example, when the opening 320 on the second connecting plate 32 is configured to be circular, the first connecting plate 31 is configured to be quasi-circular, and a diameter of the first connecting plate 31 is equal to or slightly smaller than a diameter of the opening 320, so that the first connecting plate 31 can be embedded in the opening 320. In addition, this structure can set the area of the first connecting plate 31 to be large to increase the welding area with the tab 211, reduce the internal resistance, and improve the current conduction capability.

In some embodiments, the welding region 3201 between the current collector plate 30 and the case 221 passes through the folding portion 33, that is, not only the second connecting plate 32 is welded to the case 221, but the folding portion 33 is also welded to the case 221, so as to increase the welding area between the current collector plate 30 and the case 221, improve the firmness and reliability of the welding, reduce the internal resistance, and facilitate the passage of current.

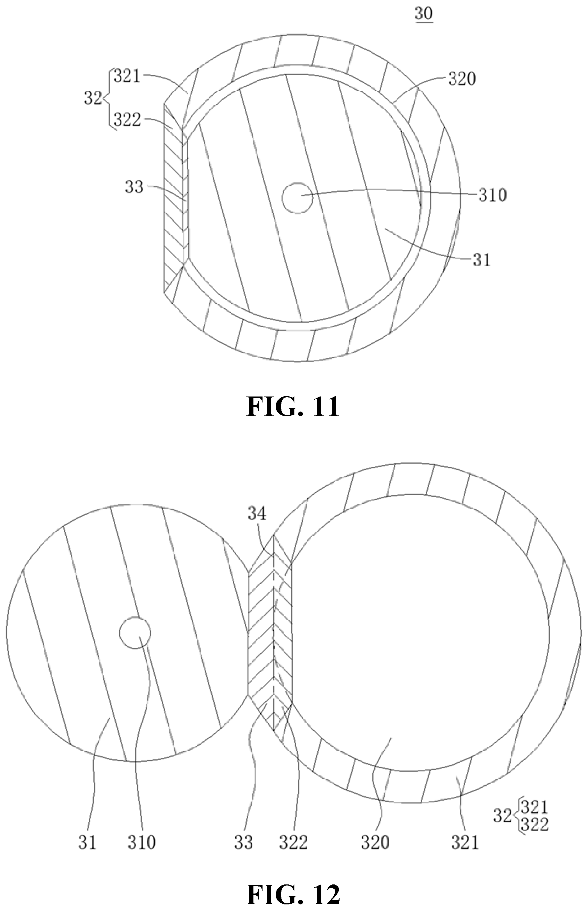

Referring to FIG. 5 and FIG. 9 to FIG. 11, FIG. 9 is a schematic diagram of a structure of a current collector plate 30 according to some embodiments of the present application. FIG. 10 is a schematic diagram of a structure of a current collector plate 30 according to other embodiments of the present application. FIG. 11 is a schematic diagram of a structure of a current collector plate 30 according to still other embodiments of the present application.

In some embodiments, a through hole 310 is opened at a central position of the current collector plate 30.

The through hole 310 refers to a hole structure that penetrates the structural member.

The central position of the current collector plate 30 refers to a geometric central position of the current collector plate 30. For example, if the current collector plate 30 is circular, the central position of the current collector plate 30 is a center of the circle of the current collector plate 30. When the current collector plate 30 is in the shape of a regular polygon, the central position of the current collector plate 30 is a symmetric center of the current collector plate 30.

The through hole 310 is provided at the central position of the current collector plate 30, which can play a positioning role when assembling the current collector plate 30, facilitating welding of the first connecting plate 31 of the current collector plate 30 to the tab 211 and the second connecting plate 32 of the current collector plate 30 to the case 221.

In some embodiments, the through hole 310 is circular, elliptical, or polygonal. The through hole 310 is configured to be circular, elliptical, or polygonal, thereby facilitating design and manufacturing.

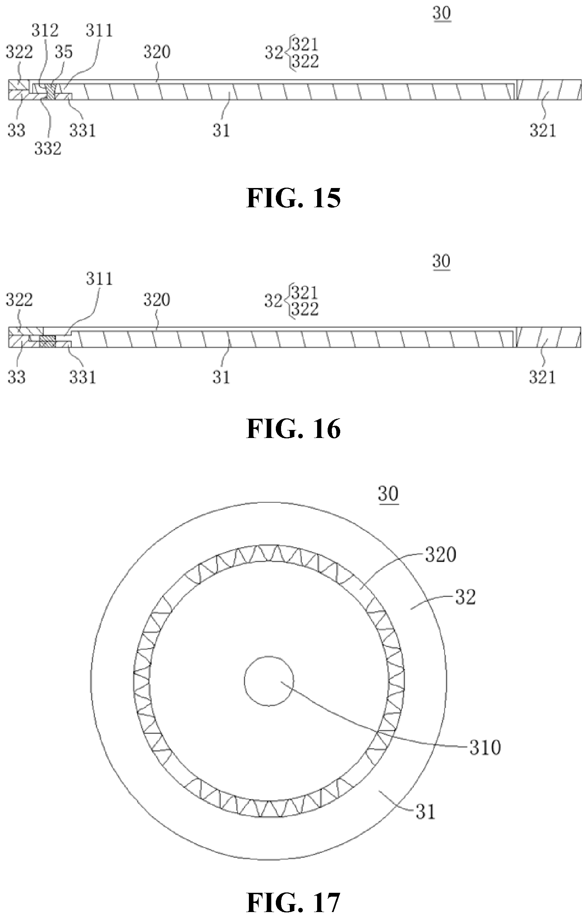

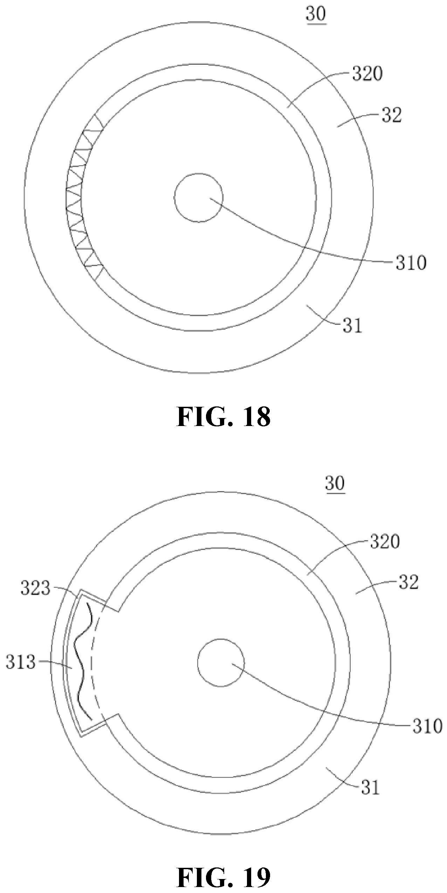

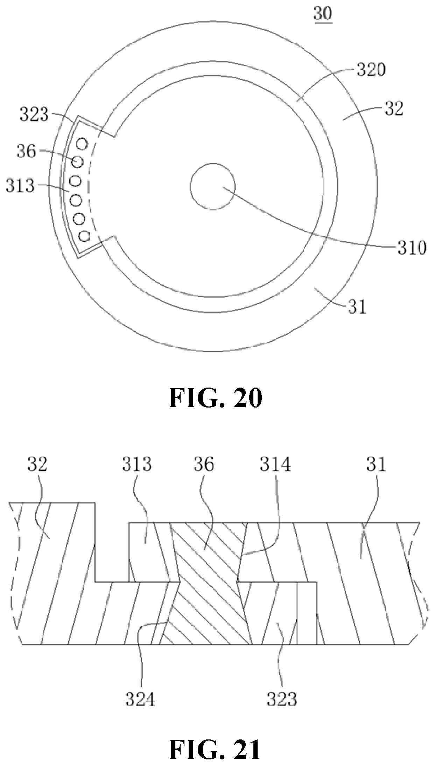

Referring to FIG. 11 and FIG. 17 to FIG. 20, FIG. 11 is a schematic diagram of a structure of a current collector plate 30 according to some embodiments of the present application. FIG. 17 is a schematic diagram of a structure of a current collector plate 30 according to other embodiments of the present application. FIG. 18 is a schematic diagram of a structure of a current collector plate 30 according to still other embodiments of the present application. FIG. 19 is a schematic diagram of a structure of a current collector plate 30 according to yet other embodiments of the present application. FIG. 20 is a schematic diagram of a structure of a current collector plate 30 according to still other embodiments of the present application.

In some embodiments, the size of the first connecting plate 31 is smaller than the size of the opening 320. For example, when the opening 320 on the second connecting plate 32 is configured to be circular, the first connecting plate 31 is configured to be quasi-circular, and the diameter of the first connecting plate 31 is smaller than the diameter of the opening 320. When the first connecting plate 31 is embedded in the opening 320, the edge of the first connecting plate 31 is spaced apart from an inner side of the opening 320 of the second connecting plate 32 to facilitate placing the first connecting plate 31 in the opening 320 of the second connecting plate 32.

Referring to FIG. 5 and FIG. 7, in some embodiments, the crease 34 may be set at the edge of the opening 320. For example, if the opening 320 is configured to be circular, the crease 34 is tangent to the opening 320. In this way, the area of the folding portion 33 can be set to be small to reduce material usage and reduce costs. In addition, a connection length between the first connecting plate 31 and the folding portion 33 can be set to be large to reduce the resistance between the first connecting plate 31 and the folding portion 33 and improve the ability of current conduction between the first connecting plate 31 and the folding portion 33.

Referring to FIG. 11 and FIG. 12, FIG. 12 is a schematic diagram of a structure when the current collector plate 30 of FIG. 11 is unfolded. In some embodiments, the opening 320 on the second connecting plate 32 is arranged to be quasi-circular, the crease 34 is tangent to the circle where the arc edge of the opening 320 is located, and the crease 34 is spaced apart from the arc edge of the opening 320. In this way, the area of the adapting portion 322 can be set to be large to better support the folding portion 33, and the adapting portion 322 and the folding portion 33 can be laminated and connected, for example, the adapting portion 322 is connected to the folding portion 33 by welding, or the adapting portion 322 is connected to the folding portion 33 by riveting, so as to improve the connection strength between the folding portion 33 and the adapting portion 322. In addition, in the structure, during welding of the adapting portion 322 to the case 221, the folding portion 33, the adapting portion 322, and the case 221 can be welded together to increase the connection strength, and the folding portion 33 is connected to the adapting portion 322 by welding.

In some embodiments, when the opening 320 is provided on the second connecting plate 32, and the crease 34 is provided to be tangent to a circle where the arc-shaped edge of the opening 320 is located, or the crease 34 is provided to be adjacent to the circle where the arc-shaped edge of the opening 320 is located, the welding region 3201 where the second connecting plate 32 is welded to the case 221 is quasi-circular, and the welding region 3201 may pass through the folding portion 33 to weld both the folding portion 33 and the adapting portion 322 to the case 221 to increase the welding area and stability.

Referring to FIG. 13 and FIG. 14, FIG. 13 is a schematic diagram of a structure of a current collector plate 30 according to some embodiments of the present application. FIG. 14 is a schematic diagram of a structure when the current collector plate 30 of FIG. 13 is unfolded.

In some embodiments, when the opening 320 is provided on the second connecting plate 32, the first connecting plate 31 is embedded in the opening 320, the second connecting plate 32 is welded to the case 221 to form the welding region 3201, the welding region 3201 where the second connecting plate 32 is welded to the case 221 is circular, and the crease 34 is located on the radial outer side of the welding region 3201.

The welding region 3201 is configured to be circular, which not only facilitates welding, but also can increase the welding area of the second connecting plate 32 and the case 221, thereby improving the firmness and reliability of the welding between the second connecting plate 32 and the case 221 and reducing the internal resistance.

The crease 34 is located on the radial outer side of the welding region 3201 so that the folding portion 33 is folded onto the second connecting plate 32, and the welding region 3201 where the second connecting plate 32 is welded to the case 221 can be configured to be circular.

The welding region 3201 formed by welding the second connecting plate 32 to the case 221 is configured to be circular, which can increase the welding area between the case 221 and the second connecting plate 32, reduce internal resistance, and improve structural strength. The crease 34 is provided on the radial outer side of the welding region 3201, so that the welding region 3201 of the formed current collector plate 30 can form an annular shape to facilitate welding to the case 221.

In some embodiments, referring to FIG. 5 to FIG. 8, the folding portion 33 and the first connecting plate 31 are connected by butt welding.

The butt welding refers to a process of arranging edges of two structural members relatively close to each other, and welding the relatively close edges of the two structural members together.

Connecting the folding portion 33 and the first connecting plate 31 by butt welding to facilitate connection.

Referring to FIG. 15 and FIG. 16, FIG. 15 is a schematic diagram of a sectional structure of a current collector plate 30 according to some embodiments of the present application. FIG. 16 is a schematic diagram of a sectional structure of a current collector plate 30 according to other embodiments of the present application.

In some embodiments, the folding portion 33 is provided with a first thinned region 331, the first connecting plate 31 is provided with a second thinned region 311, and the first thinned region 331 is laminated and connected to the second thinned region 311.

The first thinned region 331 refers to a partial region of one side of the folding portion 33 close to the first connecting plate 31, and a thickness of the partial region is smaller than a thickness of another part of the folding portion 33.

The second thinned region 311 refers to a partial region of one side of the first connecting plate 31 close to the folding portion 33, and a thickness of the partial region is smaller than a thickness of another part of the first connecting plate 31.

The first thinned region 331 and the second thinned region 311 are laminated and connected, which means that the first thinned region 331 and the second thinned region 311 are arranged to be laminated, and the first thinned region 331 and the second thinned region 311 are fixedly connected.

The first thinned region 331 is provided on the folding portion 33, and the second thinned region 311 is provided on the first connecting plate 31. The first thinned region 331 and the second thinned region 311 are laminated to facilitate connection.

Referring to FIG. 15, in some embodiments, the first thinned region 331 is staggered with the adapting portion 322, and a sum of thicknesses of the first thinned region 331 and the second thinned region 311 is less than the sum of the thicknesses of the first connecting plate 31 and the main body part 321.

The first thinned region 331 is staggered from the adapting portion 322, which means that in the thickness direction of the second connecting plate 32, the first thinned region 331 does not overlap with the adapting portion 322.

The first thinned region 331 is staggered from the adapting portion 322, and the sum of the thicknesses of the first thinned region 331 and the second thinned region 311 is smaller than the sum of the thicknesses of the first connecting plate 31 and the main body part 321, so that the thickness of the manufactured current collector plate 30 may be small, thereby reducing the space occupied in the battery cell 200 to improve the energy density of the battery cell 200.

In some embodiments, the opening 320 is provided on the second connecting plate 32, the first thinned region 331 is located in the opening 320, and the first connecting plate 31 is also located in the opening 320. As a result, the second thinned region 311 of the first connecting plate 31 and the first thinned region 331 of the folding portion 33 are laminated, and both are located in the opening 320, and are staggered with the adapting portion 322.

Referring to FIG. 16, in some embodiments, the first thinned region 331 is at least partially laminated on the second connecting plate 32, and a sum of thicknesses of the adapting portion 322, the first thinned region 331, and the second thinned region 311 is less than the sum of the thicknesses of the first connecting plate 31 and the main body part 321.

The first thinned region 331 is at least partially laminated on the second connecting plate 32, which means that the first thinned region 331 is partially laminated on the adapting portion 322 of the second connecting plate 32, or the first thinned region 331 is completely laminated on the adapting portion 322.

The first thinned region 331 is at least partially laminated on the second connecting plate 32, and the sum of the thicknesses of the adapting portion 322, the first thinned region 331, and the second thinned region 311 is made to be smaller than the sum of the thicknesses of the first connecting plate 31 and the main body part 321, so that the maximum thickness of the entire manufactured current collector plate 30 may be small, thereby reducing the space occupied in the battery cell 200 to improve the energy density of the battery cell 200.

In some embodiments, the opening 320 is provided on the second connecting plate 32, and the first thinned region 331 is located on a side. The second thinned region 311 of the first connecting plate 31 is laminated on the first thinned region 331 of the folding portion 33, and is at least partially located on the side of the opening 320, so that the first thinned region 331 is at least partially laminated on the second connecting plate 32.

Referring to FIG. 15, in some embodiments, the first thinned region 331 is connected to the second thinned region 311 by riveting.

Riveting refers to connecting two structural members by using a rivet column. The rivet column refers to a columnar member that can be shaped and deformed, such as a copper column and a steel column. As shown in FIG. 15, a first hole position 332 is provided in the first thinned region 331, and a second hole position 312 is provided in the second thinned region 311. The first rivet column 35 is inserted into the first hole position 332 and the second hole position 312, and the first rivet column 35 is compressed and deformed so that a circumferential side of the first rivet column 35 abuts against an inner wall of the first hole position 332 and an inner wall of the second hole position 312, so as to fix the first thinned region 331 and the second thinned region 311.

The first thinned region 331 is connected to the second thinned region 311 by riveting, so that the first thinned region 331 and the second thinned region 311 are more firmly connected.

In some embodiments, an inner diameter of one end of the first hole position 332 close to the second thinned region 311 can be set to be smaller than an inner diameter of the other end. In this way, when the first rivet column 35 is deformed and the peripheral side of the first rivet column 35 abuts against the inner wall of the first hole position 332, the first thinned region 331 can be better fixed, thereby improving the structural strength of the riveting.

In some embodiments, in a direction from the second thinned region 311 to the first thinned region 331: the first hole position 332 is configured to be gradually expanded, so that the inner diameter of one end of the first hole position 332 close to the second thinned region 311 is smaller than the inner diameter of the other end. This structure is convenient for processing and manufacturing.

In some embodiments, the first hole position 332 is configured in a stepped shape, and the inner diameter of one end of the first hole position 332 close to the second thinned region 311 is set to be smaller than the inner diameter of the other end, so that when abutting against the inner wall of the first hole position 332, the peripheral side of the first rivet column 35 abuts against a step of the stepped first hole position 332, thereby stably fixing the first thinned region 331 and improving the structural strength of the riveting.

In some embodiments, the first hole position 332 may also be configured as a straight hole, where the straight hole refers to a hole structure with a constant inner diameter. The first rivet column 35 is deformed so that the circumferential side of the first rivet column 35 abuts against the inner wall of the first hole position 332 to achieve an interference fit, thereby fixing the first thinned region 331.

In some embodiments, an inner diameter of one end of the second hole position 312 close to the first thinned region 331 can be set to be smaller than an inner diameter of the other end. In this way, when the first rivet column 35 is deformed and the peripheral side of the first rivet column 35 abuts against the inner wall of the second hole position 312, the second thinned region 311 can be better fixed, thereby improving the structural strength of the riveting.

In some embodiments, in a direction from the first thinned region 331 to the second thinned region 311: the second hole position 312 is configured to be gradually expanded, so that the inner diameter of one end of the second hole position 312 close to the first thinned region 331 is smaller than the inner diameter of the other end. This structure is convenient for processing and manufacturing.

In some embodiments, the second hole position 312 is configured in a stepped shape, and the inner diameter of one end of the second hole position 312 close to the first thinned region 331 is set to be smaller than the inner diameter of the other end, so that when abutting against the inner wall of the second hole position 312, the peripheral side of the first rivet column 35 abuts against a step of the stepped second hole position 312, thereby stably fixing the second thinned region 311 and improving the structural strength of the riveting.

In some embodiments, the second hole position 312 may also be configured as a straight hole, where the straight hole refers to a hole structure with a constant inner diameter. The first rivet column 35 is deformed so that the circumferential side of the first rivet column 35 abuts against the inner wall of the second hole position 312 to achieve an interference fit, thereby fixing the second thinned region 311.

In some embodiments, the first rivet column 35 may be provided on the first thinned region 331, that is, the first rivet column 35 and the first thinned region 331 are integrally formed. In this way, the second hole position 312 can be provided only in the second thinned region 311, the first rivet column 35 is inserted into the second hole position 312, and then the first rivet column 35 is deformed and abuts against the inner wall of the second hole position 312, so that the first thinned region 331 and the second thinned region 311 can be fixedly connected.

In some embodiments, the first rivet column 35 may be provided on the second thinned region 311, that is, the first rivet column 35 and the second thinned region 311 are integrally formed. In this way, only the first hole position 332 may be provided in the first thinned region 331, the first rivet column 35 is inserted into the first hole position 332, and the first rivet column 35 is deformed and abuts against the inner wall of the first hole position 332, so as to fix the first thinned region 331 and the second thinned region 311.

Referring to FIG. 16, in some embodiments, the first thinned region 331 is connected to the second thinned region 311 by penetration welding.

The penetration welding, also known as penetrating welding method, refers to a welding method in which an electric arc penetrates a workpiece in front of a molten pool to form a small hole, and as a heat source moves, a weld bead is formed behind the small hole. The penetration welding melts through one workpiece and melts at least a partial depth of another workpiece to weld the two workpieces. The penetration welding can be performed by laser welding or another welding method such as argon arc welding.

The first thinned region 331 and the second thinned region 311 are connected by penetration welding, which is convenient for connection and manufacturing.

Referring to FIG. 17, FIG. 18, and FIG. 22, in some embodiments, an edge of the first connecting plate 31 is connected to the second connecting plate 32 by butt welding.

The butt welding refers to a process of arranging edges of two structural members relatively close to each other, and welding the relatively close edges of the two structural members together.

The edge of the first connecting plate 31 is butt welded to the second connecting plate 32, which is convenient for design and processing.

Referring to FIG. 17 and FIG. 18, in some embodiments, the second connecting plate 32 is provided with the opening 320, the first connecting plate 31 is placed in the opening 320, and the edge of the first connecting plate 31 is connected to the second connecting plate 32 by butt welding, so as to support the first connecting plate 31 in the opening 320 of the second connecting plate 32.

In some embodiments, the circumferential side of the first connecting plate 31 may be connected to the second connecting plate 32 so that the circumferential side of the first connecting plate 31 is evenly restrained by the second connecting plate 32, making the first connecting plate 31 smoother.

In some embodiments, a plurality of regions of the first connecting plate 31 may be connected to the second connecting plate 32, and the regions are evenly distributed on the circumferential side of the first connecting plate 31, so that the circumferential side of the first connecting plate 31 is evenly restrained by the second connecting plate 32, making the first connecting plate 31 smoother.

Referring to FIG. 18 and FIG. 20, in some embodiments, the second connecting plate 32 is provided with the opening 320, the first connecting plate 31 is placed in the opening 320, and one side of the first connecting plate 31 is connected to the second connecting plate 32.

One side of the first connecting plate 31 being connected to the second connecting plate 32 refers to that a section of the circumference of the first connecting plate 31 is connected to the second connecting plate 32.

One side of the first connecting plate 31 is connected to the second connecting plate 32, so that only one side of the first connecting plate 31 is constrained by the second connecting plate 32. When the first connecting plate 31 is welded to the tab 211, the first connecting plate 31 can better adapt to the twisting deformation and increase the fit with the tab 211, thereby reducing the press-fitting clearance between the first connecting plate 31 and the tab 211 to reduce the risk of cold solder joints.

Referring to FIG. 19 to FIG. 21, in some embodiments, a first laminating portion 313 is provided on the edge of the first connecting plate 31, a second laminating portion 323 is provided on the second connecting plate 32, the first laminating portion 313 and the second laminating portion 323 are laminated and connected, and a sum of thicknesses of the first laminating portion 313 and the second laminating portion 323 is less than a sum of the thicknesses of the first connecting plate 31 and the second connecting plate 32.

The first laminating portion 313 refers to a sheet-like structure connected to one side of the first connecting plate 31 close to the second connecting plate 32 and having conductive properties. A thickness of the sheet-like structure is smaller than that of the first connecting plate 31. The first laminating portion 313 and the first connecting plate 31 may be integrally formed. For example, the first laminating portion 313 may be a sheet-like structure extending from the edge of the first connecting plate 31 toward the second connecting plate 32. The first laminating portion 313 and the first connecting plate 31 may also be manufactured separately, and then the first laminating portion 313 and the first connecting plate 31 are fixedly connected.

The second laminating portion 323 refers to a partial region of the second connecting plate 32 that is adapted to support the first laminating portion 313, and a thickness of the partial region is smaller than a thickness of another part of the second connecting plate 32.

The second laminating portion 323 is laminated and connected to the first laminating portion 313, which refers to that the second laminating portion 323 is arranged to be laminated on the first laminating portion 313, and the second laminating portion 323 is fixedly connected to the first laminating portion 313.

The sum of the thicknesses of the second laminating portion 323 and the first laminating portion 313 is smaller than the sum of the thicknesses of the first connecting plate 31 and the main body part 321, so that the thickness of the manufactured current collector plate 30 may be small, thereby reducing the space occupied in the battery cell 200 to improve the energy density of the battery cell 200.

By arranging the first laminating portion 313 and the second laminating portion 323, and laminating and connecting the first laminating portion 313 and the second laminating portion 323, the connection is convenient; and the sum of the thicknesses of the first laminating portion 313 and the second laminating portion 323 is smaller than the sum of the thicknesses of the first connecting plate 31 and the second connecting plate 32, so that the maximum thickness of the entire manufactured current collector plate 30 is small, thereby reducing the space occupied in the battery cell 200 to improve the energy density of the battery cell 200.

Referring to FIG. 19, in some embodiments, the first laminating portion 313 is connected to the second laminating portion 323 by penetration welding.

The penetration welding, also known as penetrating welding method, refers to a welding method in which an electric arc penetrates a workpiece in front of a molten pool to form a small hole, and as a heat source moves, a weld bead is formed behind the small hole. The penetration welding melts through one workpiece and melts at least a partial depth of another workpiece to weld the two workpieces. The penetration welding can be performed by laser welding or another welding method such as argon arc welding.

The first laminating portion 313 and the second laminating portion 323 are connected by penetration welding, which is convenient for connection and manufacturing.

Referring to FIG. 20 and FIG. 21, in some embodiments, the first laminating portion 313 is connected to the second laminating portion 323 by riveting.

Riveting refers to connecting two structural members by using a rivet column. The rivet column refers to a columnar member that can be shaped and deformed, such as a copper column and a steel column. For example, a first mounting hole 314 can be provided in the first laminating portion 313, and a second mounting hole 324 can be provided in the second laminating portion 323. A second rivet column 36 is inserted into the first mounting hole 314 and the second mounting hole 324, and the second rivet column 36 is compressed and deformed so that a circumferential side of the second rivet column 36 abuts against an inner wall of the first mounting hole 314 and an inner wall of the second mounting hole 324 to fix the first laminating portion 313 and the second laminating portion 323.

The mounting hole refers to a hole structure penetrating a structural member. For example, the first mounting hole 314 is a hole structure penetrating the first laminating portion 313, and the second mounting hole 324 is a hole structure penetrating the second laminating portion 323.

The first laminating portion 313 is connected to the second laminating portion 323 by riveting, so that the first laminating portion 313 and the second laminating portion 323 can be more firmly connected.

In some embodiments, an inner diameter of one end of the first mounting hole 314 close to the second laminating portion 323 can be set to be smaller than an inner diameter of the other end. In this way, when the second rivet column 36 is deformed and the peripheral side of the second rivet column 36 abuts against the inner wall of the first mounting hole 314, the first laminating portion 313 can be better fixed, thereby improving the structural strength of the riveting.

In some embodiments, in a direction from the second laminating portion 323 to the first laminating portion 313: the first mounting hole 314 is configured to be gradually expanded, so that the inner diameter of one end of the first mounting hole 314 close to the second laminating portion 323 is smaller than the inner diameter of the other end. This structure is convenient for processing and manufacturing.

In some embodiments, the first mounting hole 314 is configured in a stepped shape, and the inner diameter of one end of the first mounting hole 314 close to the second laminating portion 323 is set to be smaller than the inner diameter of the other end, so that when abutting against the inner wall of the first mounting hole 314, the peripheral side of the second rivet column 36 abuts against a step of the stepped first mounting hole 314, thereby stably fixing the first laminating portion 313 and improving the structural strength of the riveting.

In some embodiments, the first mounting hole 314 may also be configured as a straight hole, where the straight hole refers to a hole structure with a constant inner diameter. The second rivet column 36 is deformed so that the circumferential side of the second rivet column 36 abuts against the inner wall of the first mounting hole 314 to achieve an interference fit, thereby fixing the first laminating portion 313.

In some embodiments, an inner diameter of one end of the second mounting hole 324 close to the first laminating portion 313 can be set to be smaller than an inner diameter of the other end. In this way, when the second rivet column 36 is deformed and the peripheral side of the second rivet column 36 abuts against the inner wall of the second mounting hole 324, the second laminating portion 323 can be better fixed, thereby improving the structural strength of the riveting.

In some embodiments, in a direction from the first laminating portion 313 to the second laminating portion 323: the second mounting hole 324 is configured to be gradually expanded, so that the inner diameter of one end of the second mounting hole 324 close to the first laminating portion 313 is smaller than the inner diameter of the other end. This structure is convenient for processing and manufacturing.

In some embodiments, the second mounting hole 324 is configured in a stepped shape, and the inner diameter of one end of the second mounting hole 324 close to the first laminating portion 313 is set to be smaller than the inner diameter of the other end, so that when abutting against the inner wall of the second mounting hole 324, the peripheral side of the second rivet column 36 abuts against a step of the stepped second mounting hole 324, thereby stably fixing the second laminating portion 323 and improving the structural strength of the riveting.

In some embodiments, the second mounting hole 324 may also be configured as a straight hole, where the straight hole refers to a hole structure with a constant inner diameter. The second rivet column 36 is deformed so that the circumferential side of the second rivet column 36 abuts against the inner wall of the second mounting hole 324 to achieve an interference fit, thereby fixing the second laminating portion 323.

In some embodiments, the second rivet column 36 may be provided on the first laminating portion 313, that is, the second rivet column 36 and the first laminating portion 313 are integrally formed. In this way, the second mounting hole 324 can be provided only in the second laminating portion 323, the second rivet column 36 is inserted into the second mounting hole 324, and then the second rivet column 36 is deformed and abuts against the inner wall of the second mounting hole 324, so that the first laminating portion 313 and the second laminating portion 323 can be fixedly connected.

In some embodiments, the second rivet column 36 may be provided on the second laminating portion 323, that is, the second rivet column 36 and the second laminating portion 323 are integrally formed. In this way, only the first mounting hole 314 may be provided in the first laminating portion 313, the second rivet column 36 is inserted into the first mounting hole 314, and the second rivet column 36 is deformed and abuts against the inner wall of the first mounting hole 314, so as to fix the first laminating portion 313 and the second laminating portion 323.

In some embodiments, referring to FIG. 17 to FIG. 20, the second connecting plate 32 is configured to be circular so that when applied to a cylindrical battery cell 200, there is no need to rotate the second connecting plate 32 around a central axis of the cylindrical battery cell 200, thereby facilitating use.

In some embodiments, referring to FIG. 5 and FIG. 9 to FIG. 11, an outer contour of the second connecting plate 32 is quasi-circular.

The quasi-circular means that most regions of the circumference of the structural member are arc-shaped, and these arcs are located on a same circle.

The outer contour of the second connecting plate 32 is configured to be quasi-circular, so as to facilitate application to the cylindrical battery cell 200.

In some embodiments, the second connecting plate 32 is provided with the opening 320, the first connecting plate 31 is embedded in the opening 320, and the opening 320 is circular.

The opening 320 on the second connecting plate 32 is configured to be circular, so as to facilitate application to the cylindrical battery cell 200, and further facilitate design and manufacturing of the opening 320.

In some embodiments, the second connecting plate 32 is provided with the opening 320, the first connecting plate 31 is embedded in the opening 320, and the first connecting plate 31 is quasi-circular.

The first connecting plate 31 is configured to be quasi-circular so that when applied to the cylindrical battery cell 200, there is no need to rotate the first connecting plate 31 around the central axis of the cylindrical battery cell 200, thereby facilitating connection of the first connecting plate 31 to the tab 211.

Referring to FIG. 5, FIG. 9 to FIG. 14, and FIG. 17 to FIG. 20, in some embodiments, the second connecting plate 32 is provided with the opening 320, the first connecting plate 31 is embedded in the opening 320, and a through hole 310 is provided in the first connecting plate 31 at a position corresponding to the center of circle of the opening 320.

The through hole 310 refers to a hole structure that penetrates the structural member.

The first connecting plate 31 is embedded in the opening 320 of the second connecting plate 32, and therefore, the through hole 310 of the first connecting plate 31 actually passes through the entire current collector plate 30. The first connecting plate 31 is provided with the through hole 310 at the position corresponding to the center of the circle of the opening 320, and the through hole 310 is also located at the central position of the current collector plate 30.

The through hole 310 is provided on the first connecting plate 31, which can play a positioning role when the first connecting plate 31 is welded to the tab 211, and a pressure relief mechanism is provided on one side of the case 221 corresponding to the current collector plate 30. When the battery cell 200 expands for pressure relief, it facilitates ejection of an active material in the case 221, thereby reducing the risk of the first connecting plate 31 blocking the pressure relief mechanism and improving the reliability of the battery cell 200.

The pressure relief mechanism refers to a structural member such as a pressure relief valve and an explosion-proof valve on the battery cell 200. When the battery cell 200 expands abnormally, the pressure relief mechanism is configured to allow gas or liquid generated in the battery cell 200 to be ejected, so as to relieve the pressure of the battery cell 200.

In some embodiments, the through hole 310 is circular, elliptical, or polygonal.

The through hole 310 is configured to be circular, elliptical, or polygonal to facilitate design and manufacturing. When the through hole 310 is configured to be polygonal and the pressure relief mechanism is provided on one side of the case 221 corresponding to the current collector plate 30, when the battery cell 200 expands for pressure relief, the first connecting plate 31 can be torn from a corner of the through hole 310 to facilitate the ejection of the active material in the case 221, thereby reducing the risk of the first connecting plate 31 blocking the pressure relief mechanism and improving the reliability of the battery cell 200.

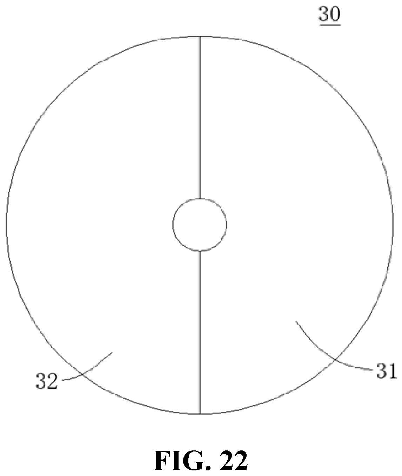

Referring to FIG. 22, in some embodiments, the first connecting plate 31 may be configured to be semicircular, and the second connecting plate 32 may also be configured to be semicircular. The first connecting plate 31 and the second connecting plate 32 are connected to form a circular current collector plate 30 for application to a cylindrical battery cell 200. In the current collector plate 30 of this structure, the projection of the first connecting plate 31 may overlap with the projection of the second connecting plate 32 in the direction perpendicular to the thickness of the second connecting plate 32, so that the overall thickness of the current collector plate 30 can be made small, thereby reducing the space occupied in the battery cell 200 to improve the energy density of the battery cell 200.

According to some embodiments of the present application, the present application provides a battery cell 200 including a case 221, an electrode assembly 21, and a current collector plate 30. The electrode assembly 21 is mounted in the case 221, and the electrode assembly 21 is provided with a tab 211. The current collector plate 30 includes a first connecting plate 31, a second connecting plate 32, and a folding portion 33. The folding portion 33 and the second connecting plate 32 are an integrally formed structure. An opening 320 is provided in the second connecting plate 32. The first connecting plate 31 is embedded in the opening 320. The folding portion 33 is laminated on the second connecting plate 32. One side of the folding portion 33 is connected to an edge of the second connecting plate 32, and the other side of the folding portion 33 is connected to the first connecting plate 31. The first connecting plate 31 is connected to the tab 211 by welding, and the second connecting plate 32 is connected to the case 221 by welding.

The first connecting plate 31 and the second connecting plate 32 are connected to form the current collector plate 30, so that the first connecting plate 31 can be welded to the tab 211 of the battery cell 200, and the second connecting plate 32 can be welded to the case 221 of the battery cell 200, so that the current collector plate 30 can be connected to the case 221 and the tab 211, thereby improving the stability and reliability of the connection. By embedding the first connecting plate 31 in the opening 320 of the second connecting plate 32, the thickness of the manufactured current collector plate 30 can be reduced, thereby reducing the space occupied in the battery cell 200 to improve the energy density of the battery cell 200. The folding portion 33 and the second connecting plate 32 are integrally formed, so that the folding portion 33 is connected to the second connecting plate 32, which also facilitates manufacturing. For example, a sheet-like plate member of the material used for manufacturing the first connecting plate 31 may be connected to a sheet-like plate member of the material used for manufacturing the second connecting plate 32, that is, the first plate member 301 and the second plate member 302 are connected and then stamped to form the first connecting plate 31, the folding portion 33, and the second connecting plate 32, which are then folded so that the first connecting plate 31 is embedded in the opening 320 of the second connecting plate 32, and the current collector plate 30 is obtained, which is convenient for manufacturing and batch production.

According to some embodiments of the present application, the present application further provides a battery, including the battery cell as described in any one of the above solutions.

According to some embodiments of the present application, the present application further provides an electrical apparatus, including the battery as described in any one of the above solutions.

The electrical apparatus may be any one of the devices or systems applying batteries as described above.

Finally, it should be noted that, the above embodiments are merely used for describing the technical solution of the present application, instead of limiting the present application. Although the present application is described in detail with reference to the foregoing embodiments, those of ordinary skill in the art should understand that they can still make modifications on the technical solution recorded in the above embodiments, or perform equivalent replacements on all or a part of technical features thereof; these modifications or replacements are not intended to make the essences of the corresponding technical solutions depart from the scope of the technical solutions of the embodiments of the present application, and they shall all be included within the scope of the claims and the specification of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A battery cell, comprising:
a case;
an electrode assembly mounted in the case, the electrode assembly being provided with a tab; and
a current collector plate comprising a first connecting plate and a second connecting plate, wherein the first connecting plate is connected to the second connecting plate, the first connecting plate is connected to the tab by welding, and the second connecting plate is connected to the case by welding; and
in a direction perpendicular to a thickness direction of the second connecting plate, a projection of the first connecting plate at least partially overlaps with a projection of the second connecting plate.

2. The battery cell according to claim 1, wherein the second connecting plate is provided with an opening, and the first connecting plate is embedded in the opening.

3. The electronic device according to claim 2, wherein one side of the first connecting plate is connected to the second connecting plate.

4. The battery cell according to any one of claims 1 to 3, wherein the current collector plate further comprises a folding portion, and the folding portion is laminated on the second connecting plate, with one side of the folding portion connected to an edge of the second connecting plate and the other side of the folding portion connected to the first connecting plate.

5. The battery cell according to claim 4, wherein the second connecting plate comprises a main body part and an adapting portion, the adapting portion is connected to the main body part, the adapting portion and the folding portion are fitted and laminated together, and a thickness of the adapting portion is less than a thickness of the main body part.

6. The battery cell according to claim 5, wherein a sum of thicknesses of the folding portion and the adapting portion is less than a sum of thicknesses of the first connecting plate and the main body part.

7. The battery cell according to any one of claims 4 to 6, wherein the folding portion and the second connecting plate are of an integrally formed structure.

8. The battery cell according to claim 7, wherein a crease is provided at a connection between the folding portion and the second connecting plate.

9. The battery cell according to any one of claims 4 to 8, wherein the folding portion is provided with a first thinned region, the first connecting plate is provided with a second thinned region, and the first thinned region is laminated and connected to the second thinned region;
the first thinned region is staggered with the adapting portion, and a sum of thicknesses of the first thinned region and the second thinned region is less than the sum of the thicknesses of the first connecting plate and the main body part; or, the first thinned region is at least partially laminated on the adapting portion, and a sum of the thicknesses of the adapting portion, the first thinned region, and the second thinned region is less than the sum of the thicknesses of the first connecting plate and the main body part.

10. The battery cell according to claim 9, wherein the first thinned region is connected to the second thinned region by penetration welding, or the first thinned region is connected to the second thinned region by riveting.

11. The battery cell according to any one of claims 1 to 3, wherein an edge of the first connecting plate is connected to the second connecting plate by butt welding.

12. The battery cell according to any one of claims 1 to 3, wherein a first laminating portion is provided on the edge of the first connecting plate, a second laminating portion is provided on the second connecting plate, the first laminating portion and the second laminating portion are laminated and connected, and a sum of thicknesses of the first laminating portion and the second laminating portion is less than a sum of thicknesses of the first connecting plate and the second connecting plate.

13. The battery cell according to claim 12, wherein the first laminating portion and the second laminating portion are connected by penetration welding, or the first laminating portion and the second laminating portion are connected by riveting.

14. The battery cell according to any one of claims 2 to 13, wherein an outer contour of the second connecting plate is quasi-circular.

15. The battery cell according to any one of claims 2 to 14, wherein the opening is circular.

16. The battery cell according to claim 15, wherein the first connecting plate is quasi-circular.

17. The battery cell according to claim 15 or 16, wherein a through hole is formed in the first connecting plate at a position corresponding to a center of the opening.

18. The battery cell according to claim 17, wherein the through hole is circular, elliptical, or polygonal.

19. A battery, comprising the battery cell according to any one of claims 1 to 18.

20. An electrical apparatus, comprising the battery according to claim 19.
